# EUROPEAN PATENT SPECIFICATION

(11) **EP 0 366 468 B1**
(45) Date of publication and mention of the grant of the patent: **08.07.1998**
(21) Application number: 89311063.5
(22) Date of filing: 26.10.1989
(51) Int. Cl.: G06F 13/40, G08C 15/12

(54) **Connector and interface device**
Anschlusspunkt und Schnittstellenvorrichtung
Connecteur et dispositif interface

(30) Priority: 26.10.1988 US 262849
(43) Date of publication of application: 02.05.1990
(73) Proprietor: XEROX CORPORATION, Rochester New York 14644 (US)
(72) Inventor: Minerd, Timothy M., Pittsford New York 14534 (US)
(74) Representative: Johnson, Reginald George

(56) References cited:
- EP-A- 0 150 592
- FR-A- 2 406 253

## Description

The invention relates to a connector and interface device and to a system incorporating such a device.

The prior art discloses connectors of the type having a logic chip or circuitry within the connector itself. For example, U.S. Patent No. 4,420,794 discloses a key device carrying an integrated circuit chip or dual in-line package that permits the chip package to be connected into a circuit board through exterior openings in the housing or cabinet carrying the circuit board. U.S. Patent No. 3,410,001 discloses a visual display panel for a number of digital-logic circuit devices capable of both mechanical and electrical connections to the panel and circuit connections for making selected logical circuit interconnections between the digital logic devices displayed on the panel. U.S. Patent No. 4,557,540 discloses a program socket including a printed circuit board with tracings for transposing pin positions between the input and output sides of the socket. U.S. Patent No 4,206,962 discloses an electrical connector having electronic components contained within the connector itself providing data transfer from closely spaced pin arrays to outside related equipment while providing a logic interconnect capability inside the connector itself. U S. Patent No 4,602,838 is another example of a connector/electronic key assembly.

U.S. Patent No. 4,607,170 relates to an interface between data communications equipment and data terminal equipment and in particular discloses a pair of pin connectors having a housing and multiple pins and a multiple conductor cable interconnecting the pins in the connectors, and an active signal circuit enclosed within the housing of one of the connectors wherein the signal circuit includes means for generating a time or clock signal for timing or clocking the flow of data signals through the interface device. U.S. Patent No. 4,609,241 is another example of a programmable socket. U.S. Patent 4,620,762 is another example of an electronic key assembly.

EP-A-0 150 592 discloses a time-slot addressed multiplier device where intelligent connectors are provided for conveying signals from a signal bus to a plurality of load components.

A difficulty with prior art devices is the lack of flexibility and the difficulty in extending the capability of the connector without costly additions of hardware and redesign such as a need to add an increasing number of interconnecting lines. Another difficulty is the inability to carry different modes or levels of signals within the connector or to be able to adapt the connector to different classes of input/output devices such as analogue and/or digital or to different configurations. such as variable input interfaces or output drivers. It is with such short comings that the present invention is concerned.

Accordingly the present invention provides a connector and interface system for conveying signals from a signal bus to a plurality of load components, the system comprising a plurality of connector devices (comprising input/output interface means connected to the signal bus and adapted for connection to the load components, and selection logic connected to the interface means and operable to establish electrical connections within the device, control means with timing means connected to the plurality of connector devices, each connector device communicating with the control means during a designated time slot within a time frame, the signal bus serving as a time division multiplex bus interconnected to the control means and to the connector devices for simultaneously conveying data to and from the control means and the connector devices within said time frame. the timing means including means to provide first voltage level clock pulses defining a clock cycle and second voltage level framing pulses, the framing pulses being determined by a change in voltage level of the clock pulses, each time frame being determined by the framing pulses, the clock pulses designating the beginning and end of data within a designated time slot.

In addition, the signal bus and connector devices are adapted to recognize and convey various levels of signals, for example, different voltage levels representing control information. reset signals, and diagnostic signals.

In another aspect of the invention there is provided a connector and interface system for conveying signals from a signal bus to a plurality of load components, the system comprising a plurality of connector devices comprising, input/output interface means connected to the signal bus and adapted for connection to the load components, and selection logic connected to the interface means and operable to establish electrical connections within the device, control means connected to the plurality of connector devices, the control means including timing means defining a time frame, a time division, multiplex bus interconnected to the control means and to the connector devices, the bus including a discrete clock line and a plurality of data lines, the control means and connector devices simultaneously exchanging data within the time frame, each connector device communicating with the control means during a designated time slot within the time frame, the timing means including means to provide first voltage level clock pulses defining a clock cycle and second voltage level framing pulses, the framing pulses being determined by a change in voltage level of the clock pulses, each time frame being determined by the framing pulses, the clock pulses designating the beginning and end of a packet of data within a designated time slot.

More particularly, the present invention provides an interface and connector module comprising: an integrated circuit, a housing member enclosing the integrated circuit, a multi-wire bus, the multi-wire bus extending into and out of a portion of the housing member and being electrically connected to the integrated circuit, an input/output connector secured to the housing member, the input/output connector electrically connected to the integrated circuit and adapted for connection to input or output devices, and programming means supported by the housing and electrically connected to the integrated circuit, the programming means adapted for programming the integrated circuit for configuring the connector interconnections.

The programming means may include a mechanically alterable switch means.

The integrated circuit may include addressing logic, in which case the programming means may include a mechanical means to selectively switch said addressing logic

Load components may be interconnected to the integrated circuit through the input/output connector, the load components being either input or output devices. The load components may include a combination of digital and analogue devices.

According to another aspect of the present invention, an interface and connector module comprises an integrated circuit,the integrated circuit including addressing logic, a housing member enclosing the integrated circuit, a multi-wire bus, the multi-wire bus extending into and out of a portion of the housing member and being electrically connected to the integrated circuit, an input/output connector secured to the housing member, the input/output connector electrically connected to the integrated circuit and adapted for connection to load components, the load components being either digital or analogue, input or output devices and programming means supported by the housing and electrically connected to the integrated circuit, the programming means including a mechanical means to selectively switch said addressing logic, the programming means adapted for programming the integrated circuit for configuring the connector electronics.

The present invention further provides a connector device in a printing machine having a plurality of load components and a data signal bus, the connector device comprising: an output load interface, an input load interface, the output load interface and the input load interface being electrically connected to said load components, a serial data input port, a serial data output port, the serial data output port and the serial data input port being electrically connected to the data signal bus, and selection logic electrically connected to the output load interface and the input load interface to configure said input load interface. The device may include programming means electrically connected to the selection logic for selectively programming the selection logic.

An interconnection system in accordance with the invention includes a plurality of connector modules for conveying control signals from a common multi-wire bus to a plurality of load devices, each of the connector modules being interconnected to the multi-wire bus in a multiplexing arrangement and comprising: an integrated circuit electrically connected to the multi-wire bus, and a plurality of input/output connectors electrically connected to the integrated circuit and the multi-wire bus, the input/output connectors being adapted for connection to predetermined load devices. Control signals may be conveyed over the multi-wire bus at a plurality of voltage levels. For example, the system may include a clock voltage level in the range of 0 - 5 volts and a framing voltage level greater than 10 volts. The system may also include a diagnostic turnaround voltage command. The control signals may include a packet of multiplexed analogue data.

A system in accordance with the invention may include programming means electrically connected to the integrated circuit, the programming means adapted for programming the integrated circuit for configuring the connector module electronics. The programming means may include the means to select alternative filtering methods for input load devices.

The present invention further provides an interface and connector system in a printing machine having a plurality of load components comprising: a control, a signal bus electrically connected to the control for conveying control and data signals between the control and load components, a plurality of interface and connector devices, each of the interface and connector devices electrically connected to the signal bus, each of said interface and connector devices being interconnected to selected ones of said plurality of load components, each of the interface and connector devices including configuration selection logic for configuring each of said connector devices. the load components may be a combination of input and output devices.

The configuration selection logic of the system may include means to program the address of each of said interface and connector devices. The selection logic may also include means to program the filter technique of selected load components.

In this aspect of the invention, the control and data signals may be multiplexed over the signal bus at a plurality of voltage levels.

By way of example, a connector system and a connector device in accordance with the invention will be described with reference to the accompanying drawings wherein the same reference numerals have been applied to like parts and wherein:
Figure 1 illustrates a connector system in accordance with the present invention;
Figure 2 is a block diagram of a typical connector device of the system illustrated in Figure 1;
Figure 3 is a block diagram of an input/output channel of the connector device illustrated in Figure 2;
Figure 4 shows the electrical interconnections within a connector device in accordance with the present invention;
Figure 5 is a timing diagram illustrating the multiplexing of data signals in a connector device in accordance with the present invention; and
Figures 6 and 7 illustrate a typical connector device in accordance with the present invention.

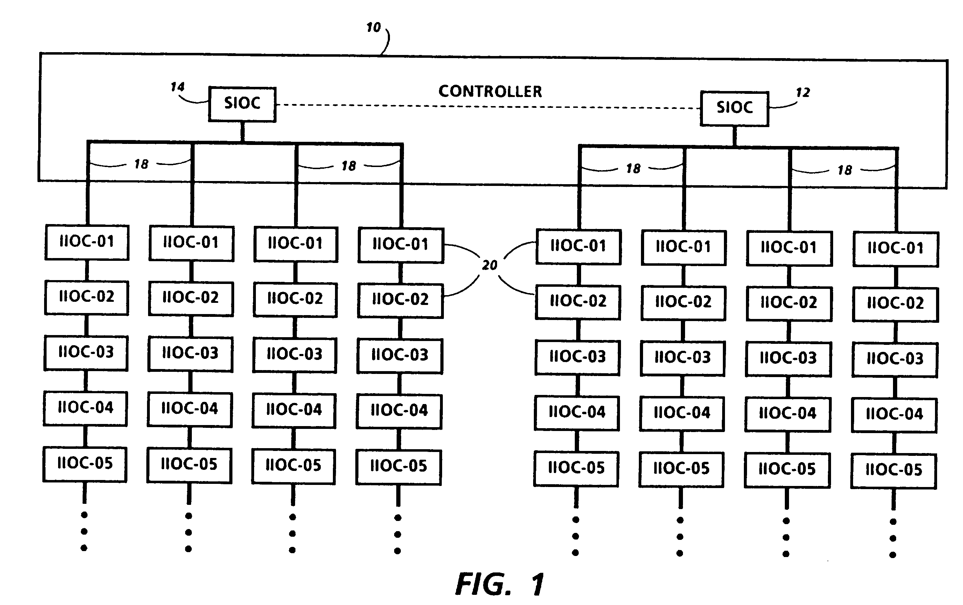

With reference to Figure 1, there is shown a system incorporating a plurality of integrated input/output interface and connector devices or modules. In particular, a controller board 10 including serial interface controllers 12 and 14 is interconnected to a plurality of interface and connector devices or modules 20 through five wire buses 18 or any other suitable bus connection. It should be understood that the controller 10 includes a microprocessor and suitable logic and timing clocks to control the transfer of data to and from the connector modules 20 through the serial interface controllers 12 and 14. Each of the connector modules 20 is suitably interconnected to output devices such as solenoids and motors and input devices such as switches and sensors. In a preferred embodiment each of the connector devices 20 is connected to two output devices and two input devices but may also be connected in the digital configuration to four output devices.

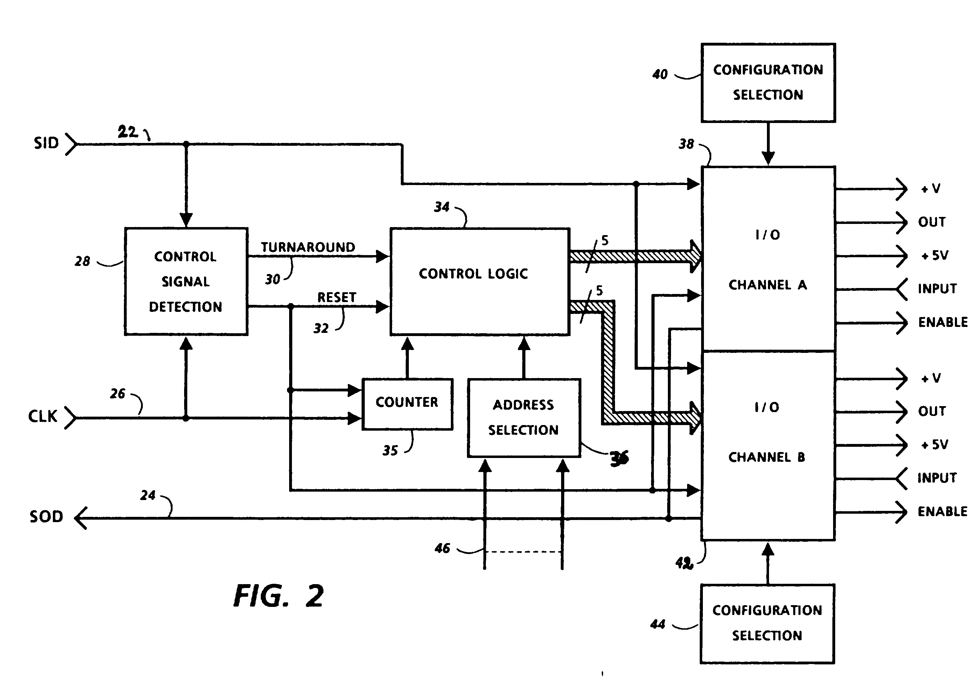

With reference to Figure 2, there is illustrated in block form the control circuitry for each of the connector modules 20. In a preferred embodiment, the control circuitry is supported on a single integrated circuit chip. The integrated circuit has the capability of providing the required drive to output devices such as electro-mechanical solenoids, clutches, and motors, as well as the required interface for input devices such as switches, optical sensors, and Hall effect sensors. The integrated circuit offers two separate configurations, one being a digital device and the other being an analog device. In the analog configuration, it can be used to provide a voltage reference such as required for xerographic power supplies as well as to monitor power supply output (for example, voltage/current) variations.

Within the integrated circuit is the logic required to derive from the serial communications line the deserved state of its output device and to report back the state of its input device. This communication takes place on a pair of serial lines, one for output states and one for input status and is done in conjunction with a number of other identical connector modules connected in parallel to the same pair of serial lines. Power for the connector modules is provided by two wires that are common to all the other connector modules connected to the common pair of serial lines.The addresses of the connector modules on the common bus are programmable and can be set at the time the connector modules are installed on the bus.

In particular,with reference to Figure 2, three of the five wires of the five wire bus 18 are a serial input data line 22, a serial output data line 24 and a clock line 26. In addition, there are a ground line and a plus 5 volts voltage line (not shown). A control signal detection logic block 28 determines whether or not the incoming data on serial input data line 22 is data information, framing information or diagnostic information. The information on line 22 is the information from the control board 10 to the connector modules 20. There is also a clock signal 26 from the controller to the connectors 20 and the serial output data line 24 conveys switch and sensor information from the connector modules 20 to the controller 10. The control signal detection circuit 28 monitors the input data over line 22 to determine the voltage level of the data. In the analog configuration, line 22 conveys analog data at voltage levels between 0-10 volts and a turnaround command if 10 volts is present during the framing interval. In the digital configuration, line 22 conveys digital data at voltage levels between 0-5 volts and the turnaround command if the voltage is at the 5 volt level during the framing interval. The turnaround voltage level is a diagnostic signal for looping test signals through the system to check drivers and receive circuitry. Preferably, there are two levels of information over the line 26, clock information at a voltage level of approximately 0 to 10 volts, and reset data at a voltage level of approximately 13 volts. The framing data is used to reset the multiplexing time slots for each of the connector modules 20 on a particular bus 18 for the receipt and transmit of data by each of the connector modules 20.

The control signal detector circuitry 28 monitors the information over lines 22, 26 and, for incoming signals that are at the turnaround or framing voltage level, provides a suitable turnaround signal 30 or reset signal 32 to control logic 34. In turn, control logic conveys the appropriate signals to input and output channels 38 and 42 over the five wire bus 18. The address selection circuitry 36 is programmable to set the address of each particular connecter module 20. Counter 35 in response to clock signals over line 26 provides appropriate timing signals to the control logic 34.

As illustrated, each of the connector modules 20 includes a pair of input/output channels as illustrated at 38 and 42. Each of the channels is connected to one input device, as shown, such as a sensor or switch and one output device, as shown, such as a solenoid or other suitable driver. Alternatively, each channel can be connected to two output drivers. Configuration selection circuitry as illustrated at 40 and 44 is connected to each of the input/output channels 38 and 42 respectively, in order to enable the appropriate electrical configuration for each of the channels to be adopted.

In particular, in a preferred embodiment, the configuration selection circuitry will provide the appropriate filtering circuitry to filter the incoming signals to the input connections on each of the channels 38 and 42.

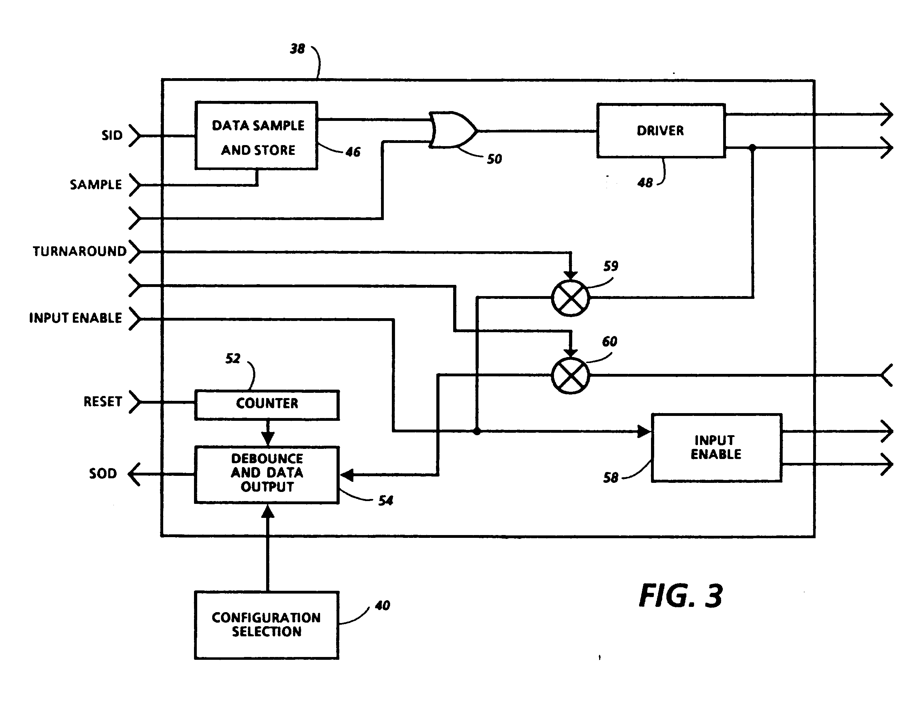

With reference to Figure 3, there is illustrated in more detail a block diagram of the input/output channel 38, it being understood that the details of the input/output channel 42 are identical. The data sample and store circuitry 46 temporarily stores the data on line 22 before activating driver 48 via gate 50 to actuate output devices. Incoming signals from sensors or switches are conveyed via logic gate 60 to debounce in data output circuit 54 which is connected to the output data line 24. As illustrated, configuration selection circuit 40 is connected to the debouncing data output circuitry 54 for designating the appropriate filtering for the incoming signals. The turnaround signal from the control logic 34 is switched out from the channel 38 via switch 59 and reset signal 32 (Fig. 2) is conveyed to counter 52.

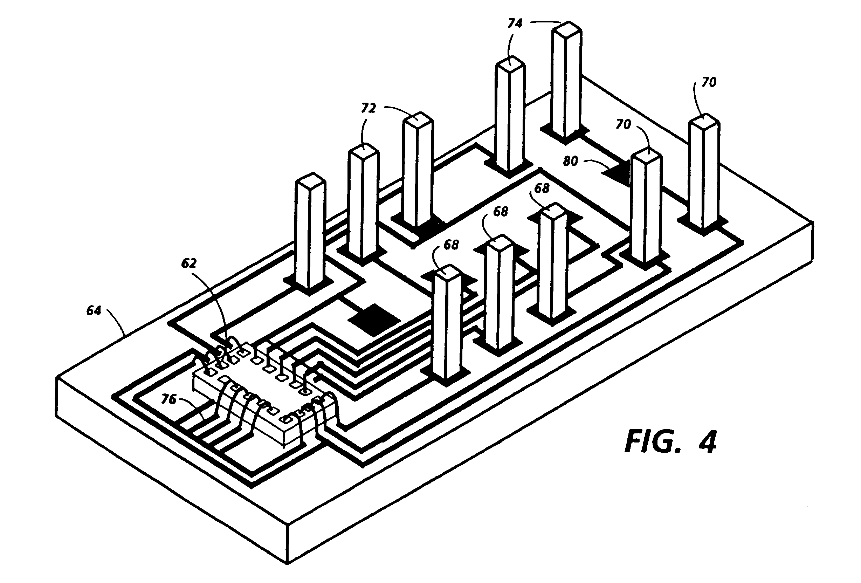

With reference to Figure 4, there is illustrated a geometric configuration of a connector module 20. In particular, a substrate 64 supports the connector chip 62 electrically connected through various conductive paths to input plugs 68 and 72 and output plugs 70 and 74. Each of the three pronged input plugs 68 and 72 is connected to a suitable connecting device to sense data and each of the output plugs 70 and 74 is connected via a suitable connector to an output driver. The five wire bus 18 is suitably interconnected to the chip 62 via the connector pads 80 and the address and configuration programming of each of the connectors 20 is via five connectors 76 as illustrated. Three of the connectors 76 are used to program the address of the connector module 20 and two of the conductors 76 are used to adapt the configuration of the connector module 20 to a suitable filter debounce circuitry.

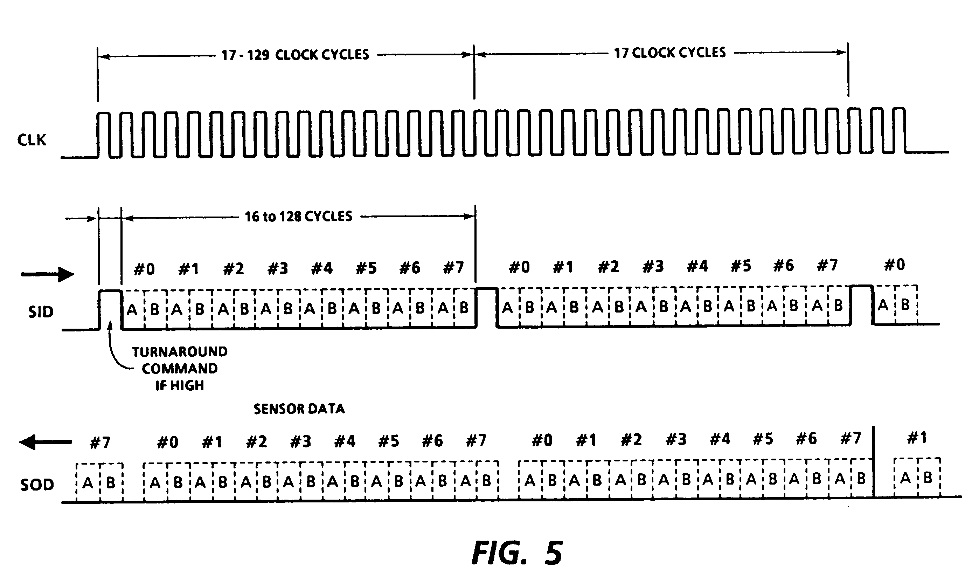

With reference to Figure 5, there is illustrated a timing diagram for the multiplexing of a plurality of connector modules 20. As illustrated, the input data signals are initiated via a framing pulse on line 26 (clock) to set up a time slot for 8 distinct connector modules 20 as illustrated by numbers 0 to 7, each of the devices having dual channels A and B. As illustrated there are seventeen clock cycles related to the block of eight modules before the reset pulse initiates the time slot once again. The framing pulses are at one voltage level and the clock signal at another level. It should be understood that each of the connector modules 20 can be adapted to monitor either digital information or analogue information or a combination of digital and analogue information.

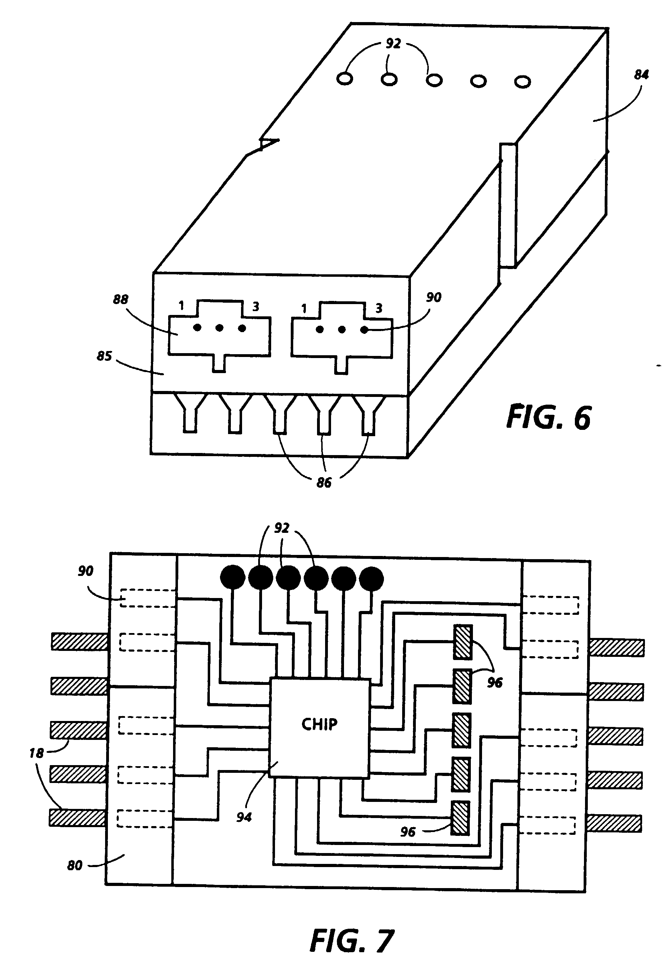

Figure 6 illustrates a typical connector module in accordance with the present invention. The integrated circuit chip is supported within a housing generally shown at 84 having a generally rectangular or any other suitable shape with suitable slots or orifices such the slots 86 for connecting the 5 wire bus 18 to the integrated circuit chip disposed within the housing. Openings 88 and 90 are also provided in the wall 85 of the housing 84 or any other suitable wall for receiving connectors or plugs to electrically interconnect the various input/output devices to the integrated circuit. Holes 92 are provided in a suitable location to be able to program the address selection circuitry 36 and the configuration selection logic 40, 44 on the integrated circuit chip.

Figure 7 shows a typical connector/chip arrangement that might be disposed within the housing 84. In particular, the chip 94 is illustrated as suitably connected to programming holes 92 and connector plugs openings 80 and 90. The five wire bus 18 extends through the housing and is electrically connected to chip 92 via pads 96.

The integrated input/output connector module described above is adapted for multiplexing input and output data and for responding to different levels of input and output signals, and is capable of being adapted to different configurations such as the interconnection to combinations of analogue and digital devices.

## Claims

1. A connector and interface system for conveying signals from a signal bus (18) to a plurality of load components, the system comprising a plurality of connector devices (20) comprising input/output interface means (Fig.2) connected to the signal bus and adapted for connection (88,90) to the load components, and
selection logic (36,40,44) connected to the interface means and operable to establish electrical connections within the device (20),
control means (10) with timing means connected to the plurality of connector devices (20), each connector device (20) communicating with the control means (10) during a designated time slot within a time frame, the signal bus (18) serving as
a time division multiplex bus interconnected to the control means and to the connector devices (20) for simultaneously conveying data to and from the control means (10) and the connector devices (20) within said time frame,
the timing means including means to provide first voltage level clock pulses defining a clock cycle and second voltage level framing pulses, the framing pulses being determined by a change in voltage level of the clock pulses, each time frame being determined by the framing pulses, the clock pulses designating the beginning and end of data within a designated time slot.

2. A system as claimed in claim 1, wherein the conveying of data from a given connector device (20) to the control means (10) is offset by one clock cycle from the conveying of data from the control means (10) to said given connector device (20).

3. A system as claimed in claim 1 or claim 2, wherein the timing means includes means to detect the rising level of a first clock pulse to convey a first packet of data on said bus during a first designated time slot within said time frame and means for a given connector device (20) to sample the first packet of data on said bus (18) on the trailing edge of said first clock pulse during said first designated time slot within said time frame.

4. A system as claimed in any one of claims 1 to 3, including means for initiating a diagnostic mode for verifying communications between the control and the plurality of connector devices.

5. A system as claimed in claim 4, wherein the means for initiating a diagnostic mode for verifying communications includes means for each of the connector devices initiating the diagnostic mode simultaneously.

6. A system as claimed in any one of claims 1 to 5, wherein each of the connector devices (20) includes an output drive and input interface including means for interconnecting the output driver to the input interface for transmission back to the control means (10).

7. A system as claimed in any one of claims 1 to 6, including means for each connector to disable the sampling of load devices.

8. A system as claimed in claim 4, including an output data line wherein the means for initiating a diagnostic mode for verifying communications includes means for detecting both a high signal on said output data line and a framing pulse.

9. A system as claimed in claim 8, including means for the system to remain in the diagnostic mode until the detection of both a low signal on said output data line and a framing pulse.

10. A connector and interface system for conveying signals from a signal bus (18) to a plurality of load components, the system comprising a plurality of connector devices (20) comprising input/output interface means (Fig.2) connected to the signal bus and adapted for connection (88,90) to the load components, and selection logic (36,40,44) connected to the interface means and operable to establish electrical connections within the device (20), control means (10) connected to the plurality of connector devices (20), the control means (10) including timing means defining a time frame,
a time division, multiplex bus interconnected to the control means (10) and to the connector devices (20), the bus (18) including a discrete clock line (26) and a plurality of data lines (22,24), the control means (10) and connector devices (20) simultaneously exchanging data within the time frame, each connector device (20) communicating with the control means (10) during a designated time slot within the time frame,
the timing means including means to provide first voltage level clock pulses defining a clock cycle and second voltage level framing pulses, the framing pulses being determined by a change in voltage level of the clock pulses, each time frame being determined by the framing pulses, the clock pulses designating the beginning and end of a packet of data within a designated time slot.

11. A system as claimed in claim 10, including:
means for synchronizing communication between the control and the plurality of connector devices during said time frame by raising the voltage level of a clock pulse to the framing pulse level for one half cycle, the connector devices simultaneously detecting the framing pulse level,
means for each of the plurality of connector devices to set detection logic in response to detecting the framing pulse level,
means to detect the rising level of a first clock pulse to convey a first packet of data on said bus during a first designated time slot within said time frame, and
means for one of said plurality of connector devices to sample the first packet of data on the trailing edge of said first clock pulse.

12. A system as claimed in claim 11, including means to detect the rising level of a second clock pulse to convey a second packet of data on said bus during a second designated time slot within said time frame, and
means for one of said plurality of connector devices to sample the second packet of data on the trailing edge of said second clock pulse.

13. A system as claimed in claim 11, wherein the means for synchronizing includes means for initiating and terminating communication between the control and the plurality of connector devices during said time frame by raising the voltage level of a clock pulse to the framing pulse level for one half cycle, the connector devices simultaneously detecting the framing pulse level.

## Patentansprüche

1. Ein Verbinder- und Schnittstellensystem zum Transportieren von Signalen von einem Signalbus (18) zu einer Mehrzahl Lastkomponenten, wobei das System eine Mehrzahl Verbindereinrichtungen (20) umfaßt, die eine Eingangs/Ausgangsschnittstelleneinrichtung (Fig. 2) umfassen, die mit dem Signalbus verbunden und zur Verbindung (88, 90) mit den Lastkomponenten geeignet ist, und
eine Auswähllogik (36, 40, 44), die mit der Schnittstelleneinrichtung verbunden und betreibbar ist, elektrische Verbindungen innerhalb der Einrichtungen (20) herzustellen,
eine Steuereinrichtung (70) mit einer Zeiteinrichtung, die mit der Mehrzahl Verbindereinrichtungen (20) verbunden ist, wobei jede Verbindereinrichtung (20) mit der Steuereinrichtung (10) während eines festgelegten Zeitschlitzes innerhalb eines Zeitrahmens kommuniziert, wobei der Signalbus (18) als
ein Zeitmultiplexbus dient, der mit der Steuereinrichtung und den Verbindereinrichtungen (20) verbunden ist, um gleichzeitig Daten zu und von der Steuereinrichtung (10) und den Verbindereinrichtungen (20) innerhalb des genannten Zeitrahmens zu transportieren, wobei
die Zeiteinrichtung eine Einrichtung enthält, Taktimpulse mit einem ersten Spannungspegel, die einen Taktzyklus festlegen, und Rahmenimpulse mit einem zweiten Spannungspegel zu liefem, wobei die Rahmenimpulse durch eine Änderung des Spannungspegels der Taktimpulse bestimmt sind, jeder Zeitrahmen durch die Rahmenimpulse bestimmt ist, die Taktimpulse den Anfang und das Ende von Daten innerhalb eines bestimmten Zeitschlitzes angeben.

2. Ein System, wie in Anspruch 1 beansprucht, wobei das Transportieren von Daten von einer gegebenen Verbindereinrichtung (20) zu der Steuereinrichtung (10) um einen Taktzyklus gegenüber dem Transportieren von Daten von der Steuereinrichtung (10) zu der genannten gegebenen Verbindereinrichtung (20) verschoben ist.

3. Ein System, wie in Anspruch 1 oder Anspruch 2 beansprucht, wobei die Zeiteinrichtung eine Einrichtung enthält, um den Anstiegspegel eines ersten Taktimpulses zu erfassen, um ein erstes Datenpaket auf dem genannten Bus während eines ersten, festgelegten Zeitschlitzes innerhalb des genannten Zeitrahmens zu transportieren, und eine Einrichtung für eine gegebene Verbindereinrichtung (20) enthält, um das erste Datenpaket auf dem genannten Bus (18) bei der Abfallsflanke des genannten ersten Taktimpulses während des genannten ersten, festgelegten Zeitschlitzes innerhalb des genannten Zeitrahmens abzutasten.

4. Ein System, wie in irgendeinem der Ansprüche 1 bis 3 beansprucht, das eine Einrichtung enthält, um einen Diagnosemodus zu initiieren, um die Kommunikationen zwischen der Steuer- und der Mehrzahl von Verbindereinrichtungen zu überprüfen.

5. Ein System, wie in Anspruch 4 beansprucht, wobei die Einrichtung zum Initiieren eines Diagnosemodus zur Überprüfung der Kommunikationen eine Einrichtung für jede der Verbindereinrichtungen enthält, die gleichzeitig den Diagnosemodus initiiert.

6. Ein System, wie in irgendeinem der Ansprüche 1 bis 5 beansprucht, wobei jede der Verbindereinrichtungen (20) einen Ausgangstreiber und eine Eingangsschnittstelle enthält, die eine Einrichtung zur Verbindung des Ausgangstreibers mit der Eingangsschnittstelle zur Rückübertragung zu der Steuereinrichtung (10) enthält.

7. Ein System, wie in irgendeinem der Ansprüche 1 bis 6 beansprucht, das eine Einrichtung für jeden Verbinder enthält, um das Abtasten der Lasteinrichtungen zu sperren.

8. Ein System, wie in Anspruch 4 beansprucht, das eine Ausgangsdatenleitung enthält, wobei die Einrichtung zur Initiierung des Diagnosemodus zur Überprüfung der Kommunikationen eine Einrichtung enthält, um sowohl ein hohes Signal auf der genannten Ausgangsdatenleitung als auch einen Rahmenimpuls zu erfassen.

9. Ein System, wie in Anspruch 8 beansprucht, das eine Einrichtung für das System enthält, in dem Diagnosemodus bis zur Erfassung sowohl eines niedrigen Signals auf der genannten Ausgangsdatenleitung und eines Rahmenimpuls zu bleiben.

10. Ein Verbinder- und Schnittstellensystem zum Transportieren von Signalen von einem Signalbus (18) zu einer Mehrzahl Lastkomponenten, wobei das System eine Mehrzahl Verbindereinrichtungen (20) umfaßt, die eine Eingangs/Ausgangsschnittstelleneinrichtung (Fig. 2) umfassen, die mit dem Signalbus verbunden und zur Verbindung (88, 90) mit den Lastkomponenten geeignet ist, und eine Auswähllogik (36, 40, 44), die mit der Schnittstelleneinrichtung verbunden und betreibbar ist, elektrische Verbindungen innerhalb der Einrichtungen (20) herzustellen,
eine Steuereinrichtung (10), die mit der Mehrzahl Verbindereinrichtungen (20) verbunden ist, wobei die Steuereinrichtung (10) eine Zeiteinrichtung enthält, die einen Zeitrahmen festlegt,
ein Zeitmultiplexbus, der mit der Steuereinrichtung (10) und mit den Verbindereinrichtungen (20) verbunden ist, wobei der Bus (18) eine einzelne Taktleitung (26) und eine Mehrzahl Datenleitungen (22, 24) einschließt, wobei die Steuereinrichtung (10) und die Verbindereinrichtung (20) gleichzeitig Daten innerhalb des Zeitrahmens austauschen, und jede Verbindereinrichtung (20) mit der Steuereinrichtung (10) während eines festgelegten Zeitschlitzes innerhalb des Zeitrahmens in Verbindung ist,
die Zeiteinrichtung eine Einrichtung enthält, Taktimpulse mit einem ersten Spannungspegel, die einen Taktzyklus festlegen, und Rahmenimpulse mit einem zweiten Spannungspegel zu liefem, wobei die Rahmenimpulse durch eine Änderung des Spannungspegels der Taktimpulse bestimmt sind, jeder Zeitrahmen durch die Rahmenimpulse bestimmt ist, die Taktimpulse den Anfang und das Ende eines Datenpakets innerhalb eines festgelegten Zeitschlitzes festlegen.

11. Ein System, wie in Anspruch 10 beansprucht, das einschließt:
eine Einrichtung zur Synchronisierung der Verbindung zwischen der Steuereinrichtung und der Mehrzahl Verbindereinrichtungen, während des genannten Zeitrahmens, indem der Spannungspegel eines Taktimpulses auf den Rahmenimpulspegel für einen halben Zyklus angehoben wird und die Verbindereinrichtungen gleichzeitig den Rahmenimpulspegel erfassen,
eine Einrichtung für jede der Mehrzahl Verbindereinrichtungen, um eine Erfassungslogik in Reaktion auf die Erfassung des Rahmenimpulspegels zu setzen,
eine Einrichtung, um den Anstiegspegel eines ersten Taktimpulses zu erfassen, um ein erstes Datenpaket auf dem genannten Bus während eines ersten, bezeichneten Zeitschlitzes innerhalb des genannten Zeitrahmens zu transportieren, und
eine Einrichtung für eine der genannten Mehrzahl Verbindereinrichtungen, um das erste Datenpaket bei der Abfallsflanke des genannten ersten Taktimpulses abzutasten.

12. Ein System, wie in Anspruch 11 beansprucht, das eine Einrichtung enthält, den Anstiegspegel eines zweiten Taktimpulses zu erfassen, um ein zweites Datenpaket auf dem genannten Bus während eines zweiten, bezeichneten Zeitschlitzes innerhalb des genannten Zeitrahmens zu transportieren, und
eine Einrichtung für eine der genannten Mehrzahl Verbindereinrichtungen, um das zwei Datenpaket bei der Abfallsflanke des genannten zweiten Taktimpulses abzutasten.

13. Ein System, wie in Anspruch 11 beansprucht, wobei die Synchronisierungseinrichtung eine Einrichtung enthält, um eine Kommunikation zwischen der Steuerung und der Mehrzahl Verbindereinrichtungen während des genannten Zeitrahmens zu initiieren und zu beenden, indem der Spannungspegel eines Taktimpulses auf den Rahmenimpulspegel während eines halben Zyklus erhöht wird, wobei die Verbindereinrichtungen gleichzeitig den Rahmenimpulspegel erfassen.

## Revendications

1. Système de connecteur et d'interface pour acheminer des signaux depuis un bus de signal (18) jusqu'à une pluralité de composants de charge, le système comprenant une pluralité de dispositifs de connexion (20) comprenant un moyen d'interface d'entrée/sortie (Figure 2) connecté au bus de signal et conçu pour établir la connexion (88, 90) avec les composants de charge, et
une logique de sélection (36, 40, 44) connectée au moyen d'interface et pouvant être commandée pour établir des connexions électriques à l'intérieur du dispositif (20),
un moyen de commande (10) comportant un moyen de cadencement connecté à la pluralité de dispositifs de connexion (20), chaque dispositif de connexion (20) communiquant avec le moyen de commande (10) pendant une tranche temporelle désignée à l'intérieur d'une trame temporelle, le bus de signal (18) servant comme
bus multiplex à répartitions temporelle interconnecté au moyen de commande-et aux dispositifs de connexion (20) pour acheminer simultanément des données vers et depuis le moyen de commande (10) et les dispositifs de connexion (20) à l'intérieur de ladite trame temporelle,
le moyen de cadencement incluant un moyen pour produire des impulsions d'horloge d'un premier niveau de tension définissant un cycle d'horloge et des impulsions d'encadrement d'un second niveau de tension, les impulsions d'encadrement étant déterminées par une variation du niveau de tension des impulsions d'horloge, chaque trame temporelle étant déterminée par les impulsions d'encadrement, les impulsions d'horloge désignant le début et la fin des données à l'intérieur d'une trame temporelle donnée.

2. Système selon la revendication 1, dans lequel l'acheminement de données depuis un dispositif de connexion (20) donné jusqu'au moyen de commande (10) est décalé d'un cycle d'horloge de l'acheminement de données depuis le moyen de commande (10) jusqu'audit dispositif de connexion (20) donné.

3. Système selon la revendication 1 ou 2, dans lequel le moyen de cadencement comprend un moyen pour détecter le niveau montant d'une première impulsion d'horloge pour acheminer un premier paquet de données sur ledit bus pendant une première tranche temporelle désignée à l'intérieur de ladite trame temporelle et un moyen pour un dispositif de connexion (20) donné pour échantillonner le premier paquet de données sur ledit bus (18) sur le front descendant de ladite première impulsion d'horloge pendant ladite première tranche temporelle désignée à l'intérieur de ladite trame temporelle.

4. Système selon l'une quelconque des revendications 1 à 3, comprenant un moyen pour initier un mode de diagnostic afin de vérifier les communications entre le contrôleur et la pluralité de dispositifs de connexion.

5. Système selon la revendication 4, dans lequel le moyen pour initier un mode diagnostic afin de vérifier les communications comporte un moyen pour chacun des dispositifs de connexion initiant simultanément le mode diagnostic.

6. Système selon l'une quelconque des revendications 1 à 5, dans lequel chacun des dispositifs de connexion (20) comprend un circuit d'attaque de sortie et une interface d'entrée comprenant un moyen pour interconnecter le circuit d'attaque de sortie à l'interface d'entrée à des fins de transmission en retour vers le moyen de commande (10).

7. Système selon l'une quelconque des revendications 1 à 6, comprenant un moyen pour chaque connecteur pour désactiver l'échantillonnage des dispositifs de charge.

8. Système selon la revendication 4, incluant une ligne de données de sortie dans laquelle le moyen pour initier un mode diagnostic afin de vérifier les communications comprend un moyen pour détecter à la fois un signal de niveau haut sur ladite ligne de données de sortie et à la fois une impulsion d'encadrement.

9. Système selon la revendication 8, comprenant un moyen permettant au système de demeurer dans le mode diagnostic jusqu'à la détection à la fois d'un signal de niveau bas sur ladite ligne de données de sortie et à la fois d'une impulsion d'encadrement.

10. Système de connecteur et d'interface pour acheminer des signaux depuis un bus de signal (18) jusqu'à une pluralité de composants de charge, le système comprenant une pluralité de dispositifs de connexion (20) comprenant un moyen d'interface d'entrée/sortie (Figure 2) connecté au bus de signal et conçu pour établir une connexion (88, 90) avec les composants de charge et une logique de sélection (36, 40, 44) connectée au moyen d'interface et pouvant être commandée pour établir les connexions électriques à l'intérieur du dispositif (20), un moyen de commande (10) connecté à la pluralité de dispositifs de connexion (20), le moyen de commande (10) incluant un moyen de cadencement définissant une trame temporelle,
un bus multiplex à répartition temporelle interconnecté au moyen de commande (10) et aux dispositifs de connexion (20), le bus (18) incluant une ligne d'horloge discrète (26) et une pluralité de lignes de données (22, 24), le moyen de commande (10) et les dispositifs de connexion (20) échangeant simultanément des données à l'intérieur de la trame temporelle, chaque dispositif de connexion (20) communiquant avec le moyen de commande (10) pendant une tranche temporelle désignée à l'intérieur de la trame temporelle,
le moyen de cadencement comprenant un moyen pour produire des impulsions d'horloge d'un premier niveau de tension définissant un cycle d'horloge et des impulsions d'encadrement d'un second niveau de tension, les impulsions d'encadrement étant déterminées par une variation du niveau de tension des impulsions d'horloge, chaque trame temporelle étant déterminée par les impulsions d'encadrement, les impulsions d'horloge désignant le début et la fin d'un paquet de données à l'intérieur d'une tranche temporelle désignée.

11. Système selon la revendication 10, incluant :
un moyen pour synchroniser la communication entre le contrôleur et la pluralité des dispositifs de connexion pendant ladite trame temporelle en élevant le niveau de tension d'une impulsion d'horloge jusqu'au niveau de l'impulsion d'encadrement pendant un premier demi cycle, les dispositifs de connexion détectant simultanément le niveau de l'impulsion d'encadrement,
un moyen pour chacun de la pluralité des dispositifs de connexion pour initier la logique de détection en réponse à la détection du niveau d'impulsion d'encadrement,
un moyen pour détecter le niveau montant d'une première impulsion d'horloge afin d'acheminer un premier paquet de données sur ledit bus pendant une première tranche temporelle désignée à l'intérieur de ladite trame temporelle, et
un moyen pour l'un de ladite pluralité des dispositifs de connexion afin d'échantillonner le premier paquet de données sur le front arrière de ladite première impulsion d'horloge.

12. Système selon la revendication 11, comprenant un moyen pour détecter le niveau montant d'une seconde impulsion d'horloge afin d'acheminer un second paquet de données sur ledit bus pendant une seconde tranche temporelle désignée à l'intérieur de ladite trame temporelle, et
un moyen pour l'un de ladite pluralité des dispositifs de connexion pour échantillonner le second paquet de données sur le front arrière de ladite seconde impulsion d'horloge.

13. Système selon la revendication 11, dans lequel le moyen de synchronisation comprend un moyen pour initier et terminer une communication entre le contrôleur et la pluralité des dispositifs de connexion pendant ladite trame temporelle en élevant le niveau de tension d'une impulsion d'horloge jusqu'au niveau de l'impulsion d'encadrement pendant un premier demi cycle, les dispositifs de connexion détectant simultanément le niveau de l'impulsion d'encadrement.
